# EUROPEAN PATENT APPLICATION

(11) **EP 3 028 846 A1**
(43) Date of publication of application: **08.06.2016**
(21) Application number: 14196169.8
(22) Date of filing: 03.12.2014
(51) Int. Cl.: B32B 5/08, B32B 5/26, B32B 9/02, B32B 17/02

(54) **A composite board made from recycled and recyclable materials**

(71) Applicant: Galle, Rudy, 9750 Zingem (BE)
(72) Inventor: Galle, Rudy, 9750 Zingem (BE)
(74) Representative: BiiP cvba

(57) **Abstract**

The present invention is directed to a composite board at least partially made of a nonwoven composite material, said nonwoven composite material comprising:
- unravelled natural fibers and/or glass fibers, and
- Plastic fibers.

Further, the present invention is also directed to the use of such composite board in all applications wherein Particle Board (PB), Medium and High Density Fibreboard (MDF & HDF), Oriented Strand Board (OSB), Laminated Veneer Lumber (LVL), Plywood (PLW) and related materials are used, and in wall panels, separation panels, insulation panels, laminates, flooring, in particular laminate flooring, tiles, furniture, and related applications.

In addition, the present invention is directed to a process for manufacturing a composite board comprising mixing unravelled natural fibers and/or glass fibers, and plastic fibers, and thermoforming said mix into a nonwoven composite material layer.

## Description

### FIELD OF THE INVENTION

The present invention relates to a composite board at least partially made of a nonwoven composite material.

In addition, the present invention relates to a process for manufacturing a composite board at least partially made of nonwoven composite material layer.

### BACKGROUND

As commonly known, fiberboard, particularly medium-density fiberboard (MDF), is heavily used as building panels and in furniture industry. For pieces that will be visible, a veneer of wood is often glued onto fiberboard to give it the appearance of conventional wood. Further, fiberboard is also used in for example industries such as auto industry to create free-form shapes such as dashboards, rear parcel shelves, and inner door shells. These pieces are then usually covered with a skin, foil, or fabric.

Though the environmental impact of for example MDF has greatly improved over the years by using recycled paper, bamboo, carbon fibers and polymers, forest thinnings, sawmill off-cuts, etc, industry is consistently moving away from wood-based structural members and panels.

Therefore many attemps have been made to develop composite boards based on alternative materials.

One example is US2006111003 describing a hardboard made of nonwoeven fibrous material layers using natural fibers, plastic fibers, and bi-component fibers, alternating with woven fiber layers for example of glass fiber.

A clear drawback of the technology described is that, in order to get a composite board with sufficient multi-directional strength, a complex structure of non-woven and woven layers is required.

Considering the above, it is an object of the present invention, to provide a composite board which does not require a complex layer structure in order to achieve sufficient (bi-directional) strength for conventional use.

Another object of the present invention is to provide a composite board having characteristics suitable for being used in heavy duty applications. Impact strength, swell, heat resistance, heat retardancy, dimensional stability may be at least comparable with or improved versus conventional fiberboards or composite boards.

In another object of the present invention a composite board is provided having an impact strength and load resistance comparable with or higher than MDF or HDF boards, such combined with significantly lower weight.

Another object of the present invention is to provide a composite board made of recyclable and/or recycled materials.

Further, it is an object of the present invention to provide an improved method for manufacturing composite boards allowing using recycled and recyclable materials.

Further, the present invention provides a process allowing using porous, hydroscopic, visco-elastic raw materials as a base material in the manufacturing of durable and dimensionally stable composite boards.

### SUMMARY OF THE INVENTION

The present invention is directed to a composite board at least partially made of a nonwoven composite material, said nonwoven composite material comprising:
- unravelled natural fibers and/or glass fibers, and
- Plastic fibers.

Further, the present invention is also directed to the use of such composite board in all applications wherein Particle Board (PB), Medium and High Density Fibreboard (MDF & HDF), Oriented Strand Board (OSB), Laminated Veneer Lumber (LVL), Plywood (PLW) and related materials are used, and in wall panels, separation panels, insulation panels, laminates, flooring, in particular laminate flooring, tiles, furniture, and related applications.

In addition, the present invention is directed to a process for manufacturing a composite board comprising mixing unravelled natural fibers and/or glass fibers, and plastic fibers, and thermoforming said mix into a nonwoven composite material layer.

### DETAILED DESCRIPTION

In an embodiment in accordance with the present invention, a composite board at least partially made of a nonwoven composite material is provided, said nonwoven composite material comprising:
- unravelled natural fibers and/or glass fibers, and
- Plastic fibers.

In the context of the present invention, the raw natural materials such as jute, hemp, cocos, etc are treated by a bast fibre opening machine or tearing machine to be unravelled to fiber stage. The unravelled natural fibers may comprise any natural fiber as for example jute, flax, hemp, sisal, coco, or bamboo, or animal fibers.

Alternatively, or in combination with natural fibers also glass fibers may be used.

The most important types of natural fibres used in composite boards according to the present invention are flax, hemp, jute, kenaf, cocos and sisal due to their properties and availability. Using jute fiber has many advantages. Firstly it is has wood like characteristics as it is a bast fibre. Jute has high specific properties, low density, less abrasive behaviour to the processing equipment, good dimensional stability and harmlessness.. The fiber has a high aspect ratio, high strength to weight ratio, and has good insulation properties. Jute is a low cost eco-friendly product and is abundantly available, easy to transport.

In the context of the present invention, the plastic fibers may be freshly produced fibers or may originate from any type of waste or recycled plastic fiber sheet material, such as textile, fabric, carpet, clothing, or big bags (i.e. flexible intermediate bulk containers (FIBC)). In case of recycled plastic fibers, they may be obtained by unravelling or tearing, and optionally subsequently combing, recycled plastic fiber material, woven and non-woven. The plastic fiber material may be of any type of plastic used in the production of plastic fiber materials, woven or nonwoven, as for example polypropylene fibers, polyvinyl fibers, polyethylene fibers, polyester fibers, etc.

In an embodiment in accordance with the present invention, a composite board is provided comprising at least 40%weight at least 50%weight, or at least 60%weight, or at least 80%weight, or at least 90%weight of unravelled natural fibers and/or glass fibers.

In another embodiment in accordance with the present invention, a composite board is provided comprising less than 60%weight, or less than 50%weight, or less than 40%weight, or less than 20%weight or less than 10%weight, or less than 5% of plastic fibers.

Without being bound by any theory, it is believed that using unravelled fibers as described above results in nonwoven composite material having a netting structure embedded in a plastic matrix, providing a composite board in accordance with the present invention suitable for being used in heavy duty applications. Impact strength, swell, heat resistance, heat retardancy, dimensional stability may be at least comparable with or improved versus conventional fiberboards or composite boards.

Further, impact strength and load resistance may be comparable with or higher than the characteristics of conventionally used MDF or HDF boards, such combined with significantly lower weight. For example, a typical medium-density fiberboard of 650kg/m³ as required in many furniture applications may be replaced by a composite board according to the present invention with a density of less than 550, or less than 450, or even less than 400kg/m³, even about 350kg/m³.

Another benefit is that this composite board is made of recyclable and/or recycled materials.

A composite board in accordance with the present invention may further comprise a thermoharder. Such thermoharder may be any type of thermoharder material allowing mixing with a blend of unravelled natural fibers and/or glass fibers, and plastic fibers. Such thermoharder may be in powder form or in liquid form, for example a polyester-based powder, or an epoxy-based powder or liquid, or a formaldehyde-based powder or liquid, or polyurethane liquid resin, or a water glass based binder as described in WO2013079635 herewith incorporated by reference.

Using a thermoharder may result in strengthening the plastic fiber matrix and may enhance the formation of even more durable and rigid nonwoven composite material structure.

A composite board in accordance with the present invention may comprise less than 50%weight or, less than 25%weight, or less than 20%weight or less than 10%weight, or less than 5% of said thermoharder.

In a particular embodiment of the present invention, a composite board may comprise between 40 and 90%weight unravelled natural fibers and/or glass fibers, between 40 and 5%weight plastic fibers, and between 40 and 5%weight thermoharder.

In another particular embodiment of the present invention, a composite board may comprise between 50 and 75%weight unravelled natural fibers and/or glass fibers, between 10 and 40%weight plastic fibers and between 10 and 40%weight thermoharder.

In another particular embodiment of the present invention, a composite board may comprise between 50% and 75%weight unravelled natural fibers and/or glass fibers, 15 and 40%weight plastic fibers, and between 10 and 30%weight thermoharder.

In addition, a composite board of the present invention may further comprise bi-component fibers, preferably less than 25%weight, or less than 20%weight or less than 10%weight, or less than 5%weight.

Bi-component fibers are manufactured from two different polymers by spinning and joining them in a simultaneous process from one spinneret, resulting for example in a fiber having a polyethyleneterefthalate core and a polypropylene outer layer.

In the context of the present invention, the bi-component fibers may be made of two components having a melting point of at least 80°C, or at least 110°C for the outer layer, and at least 140°C or at least 160°C for the core.

Without being bound by any theory, it is believed that because of the fact that the core fiber due it's high melting point is kept intact during processing and is mixed with the unraveled natural fibers and/or glass fibers, whereas the outer layer becomes part of the plastic matrix, an even more strong and rigid structure may be obtained.

In addition, a composite board according to the present invention may be at least partially made of nonwoven composite material board, said nonwoven composite material board made of a mono-layer of thermoformed and pressed nonwoven composite material, or made of a multilayer of thermoformed nonwoven composite material layers pressed onto each other.

Alternatively, within a multilayer of nonwoven composite material layers several monolayers may be alternated with layers of alternative materials.

A composite board according to the present invention may have at one or more sides an outer layer treated for direct painting or décor printing.

Further, the composite board according to the present invention may comprise at one or more sides one or more finishing layers, such as for example a pre-printing layer suitable for direct printing, and/or a printed décor layer, and/or one or more lacquer or coating layers.

Composite board in accordance with the present invention may be used in all applications wherein Particle Board (PB), Medium and High Density Fibreboard (MDF & HDF), Oriented Strand Board (OSB), Laminated Veneer Lumber (LVL), Plywood (PLW) and related materials are used, and in wall panels, separation panels, insulation panels, laminates, flooring, in particular laminate flooring, tiles, furniture, and related applications.

In addition, the present invention provided a process for manufacturing a composite board comprising mixing unravelled natural fibers and/or glass fibers, and plastic fibers, and thermoforming said mix into a nonwoven composite material layer.

In the context of the present invention, thermoforming may be any type of thermoforming suitable for composite board formation (e.g. heat pressing, moulding, vacuum molding, etc), and may comprise any type of heating having the capacity to sufficiently raise the temperature within the core of the composite material mix during thermoforming, such as for example steam heating or steam injection heating or microwave heating.

The temperature within the core of the composite material mix during thermoforming may be at least 100°C, or at least 120°C, or at least 140°C.

A process according to the present invention may comprises mixing between 40 and 90%weight unravelled natural fibers and/or glass fibers, and between 10 and 60%weight plastic fibers.

Though natural fibers such as jute etc. are porous, hydroscopic, visco-elastic materials, a process according to the present invention enables it's use as a base material in the manufacturing of durable and re-usable composite boards.

The plastic fibers may have a melting point of at least 100°C, or at least 120°C, or even at least 140°C, such that during thermoforming the unravelled natural fibers (or the glass fibers) become sufficiently embedded within a plastic melt.

In a particular embodiment of the present invention, between 40 and 90%weight unravelled natural fibers and/or glass fibers, between 40 and 5%weight plastic fibers, and between 40 and 5%weight thermoharder may be mixed.

In another particular embodiment of the present invention, between 50 and 75%weight unravelled natural fibers and/or glass fibers, between 10 and 40%weight plastic fibers and between 10 and 40%weight thermoharder may be mixed.

The natural or glass fibers, and the plastic fibers may be blended by any conventional technique suitable for mixing fibers. Alternatively, needle punching may be used, which is a technique wherein mechanical interlocking of the fibers is achieved by means of thousands of barbed felting needles repeatedly passing into and out of the fiber mix.

The unravelled natural fibers and/or glass fibers and/or the plastic fibers may not be shredded, milled of treated by any other technique with the purpose of decreasing the fiber length as compared to the unraveled natural fiber length or the original plastic fiber length.

The fiber length may be at least 0,5cm, or at least 0.7cm, or preferably at least 1 cm in order to obtain a desired netting structure. In case the fibers are mixed by means of needle punching, the fiber length is preferably at least 1.2cm, or even more preferred at least 1.5cm.

The thermoharder may be mixed with the unravelled natural fibers and/or glass fibers, and the plastic fibers, by any type of conventional technique for mixing a powder into a blend of fibers, for example by means of airblowing or spreading onto the fiber layer. Alternatively in case of a liquid thermoharder, spraying or immersing may be used, for example a needle-punched material layer may be immersed in a bath of liquid thermoharder.

Subsequently to thermoforming the nonwoven composite material layer may be cold pressed, thereby forming a mono-layer nonwoven composite material board. Cold pressing may have the advantage of relaxing the nonwoven composite material board in order to decrease breaking risk.

Alternatively, the step of thermoforming may comprise immediate heat pressing the nonwoven composite material layer into a mono-layer nonwoven composite material board.

In an embodiment of the present invention, a process for manufacturing a composite board may further comprise mixing bi-component fibers within the fiber mix.

In a preferred embodiment of the present invention, a process for manufacturing a composite board is provided comprising thermoforming a plurality of nonwoven composite material layers and connecting them by pressing, thereby forming a multilayer nonwoven composite material board.

A process for manufacturing a composite board according to the present invention may further comprise a finishing treatment onto one or more sides of the nonwoven composite board material, for example a pre-printing treatment (i.e. preparing the board surface for direct (digital) printing), and/or a décor printing step (i.e. imitation wood print), or coating, painting, waxing, etc.

Alternatively such process may further comprise providing one or more finishing layers and pressing said one or more finishing layers onto one or more sides of the nonwoven composite board material. Such finishing layer may be for example a pre-printing layer suitable for direct (digital) printing, and/or a printed décor layer, and/or one or more lacquer or coating layers.

A composite board according to the present invention may further being processed in all types sawing, cutting, nailing, gluing, grinding, polishing, or painting operations.

In an embodiment of the present invention, a particular process for manufacturing a composite board is provided comprising:
- mixing unravelled natural fibers and/or glass fibers, plastic fibers, and thermoharder powder
- Pre-heating the mix in pre-heating mould
- transporting to pre-heated fiber layer into a steam injection oven, thereby forming a nonwoven composite material layer
- cold pressing the nonwoven composite material layer
- pressing several nonwoven composite material layers onto each other thereby forming a multilayer nonwoven composite board

In another embodiment of the present invention, an alternative process for manufacturing a composite board is provided comprising:
- mixing unravelled natural fibers and/or glass fibers, and plastic fibers by needle punching, resulting in a provisional non-woven composite fiber mat.
- sprinkling thermoharder liquid onto this composite fiber mat, or immersing the mat into a thermoharder liquid bath
- heat pressing the immersed mat into a nonwoven composite material layer
- pressing several nonwoven composite material layers onto each other thereby forming a multilayer nonwoven composite board

## Claims

1. A composite board at least partially made of a nonwoven composite material, said nonwoven composite material comprising:
- unravelled natural fibers and/or glass fibers, and
- Plastic fibers.

2. A composite board according to claim 1, comprising at least 40%weight at least 50%weight, or at least 60%weight, or at least 80%weight, or at least 90%weight of unravelled natural fibers and/or glass fibers.

3. A composite board according to claims 1 to 2, comprising less than 60%weight, or less than 50%weight, or less than 40%weight, or less than 20%weight or less than 10%weight, or less than 5% of plastic fibers.

4. A composite board according claims 1 to 3, further comprising a thermoharder.

5. A composite board according to claim 4, comprising less than 50%weight or, less than 25%weight, or less than 20%weight or less than 10%weight, or less than 5% of thermoharder.

6. A composite board according to claim 5, comprising between 50 and 75%weight unravelled natural fibers and/or glass fibers, between 10 and 40%weight plastic fibers and between 10 and 40%weight thermoharder.

7. A composite board according to claims 1 to 7 wherein the nonwoven composite material further comprises bi-component fibers.

8. A composite board according to claims 1 to 7, comprising one or more finishing layers, optionally including a pre-printing layer and/or a printed décor layer, on one or more sides.

9. Process for manufacturing a composite board comprising mixing unravelled natural fibers and/or glass fibers, and plastic fibers, and thermoforming said mix into a nonwoven composite material layer.

10. Process for manufacturing a composite board according to claim 9, wherein thermoforming comprises steam heating or steam injection heating or microwave heating.

11. Process for manufacturing a composite board according to claims 9 or 10, wherein between 40 and 90%weight unravelled natural fibers and/or glass fibers, between 10 and 60%weight plastic fibers are mixed.

12. Process for manufacturing a composite board according to claims 9 to 11, wherein between 40 and 90%weight unravelled natural fibers and/or glass fibers, between 40 and 5%weight plastic fibers, and between 40 and 5%weight thermoharder are mixed.

13. Process for manufacturing a composite board according to claims 9 to 12 wherein the step of mixing comprises needle punching (Air-lay).

14. Process for manufacturing a composite board according to claims 9 to 12, wherein subsequently to thermoforming the nonwoven composite material layer is cold pressed, thereby forming a mono-layer nonwoven composite material board.

15. Process for manufacturing a composite board according to claims 9 to 12, comprising thermoforming a plurality of nonwoven composite material layers and connecting them by pressing, thereby forming a multilayer nonwoven composite material board.

16. A process for manufacturing a composite board according to 9 to 12, further comprising a finishing treatment, optionally a pre-printing treatment, onto one or more sides of the nonwoven composite board material.

17. A process for manufacturing a composite board according to 9 to 12, further comprising providing one or more finishing layers, optionally including a printed décor layer, and pressing said one or more finishing layers onto one or more sides of the nonwoven composite board material.

18. Use of a composite board according to claims 1-8 in all applications wherein Particle Board (PB), Medium and High Density Fibreboard (MDF & HDF), Oriented Strand Board (OSB), Laminated Veneer Lumber (LVL), Plywood (PLW) and related materials are used, and in wall panels, separation panels, insulation panels, laminates, flooring, in particular laminate flooring, tiles, furniture, and related applications..
